# EUROPEAN PATENT APPLICATION

(11) **EP 1 217 594 A1**
(43) Date of publication of application: **26.06.2002**
(21) Application number: 01309046.9
(22) Date of filing: 24.10.2001
(51) Int. Cl.: G09B 21/00, G07F 19/00

(54) **Self-service terminal user interface**

(30) Priority: 08.12.2000 GB 0029948
(71) Applicant: NCR INTERNATIONAL INC., Dayton, Ohio 45479 (US)
(72) Inventor: Davies, Jeff, Point Frederick, NSW 2250 (AU)
(74) Representative: Williamson, Brian

(57) **Abstract**

A self-service terminal user interface includes a touch screen that is adapted for receipt of a plurality of symbols. The user interface also includes a means adapted to identify specific functions that correspond to each of the symbols. The interface is operable by a visually impaired user by drawing predetermined symbols on the screen.

## Description

This invention relates to a self-service terminal user interface and in particular to a user interface adapted for use by the visually impaired.

For a number of years manufacturers of self-service terminals such as Automated Teller Machines have included Braille buttons in order to assist visually impaired users. However, less than 5% of such users are capable of reading Braille. This has lead to a large variety of different approaches to the problem of enabling access to such terminals for visually impaired users. For example, prior art ATMs have been provided with an audio link which verbally instructs the user as he or she attempts to use the terminal. Also, raised lead lines have been moulded into ATMs for the user to follow with a finger to lead the user from a central point, such as the key pad to peripheral points on the ATM, such as the card entry or cash dispensing slots.

However, these approaches do not particularly assist a visually impaired user in actually entering information into the terminal. For example, entering a Personal Identification Number (PIN) or finding an "ENTER" key or other FSD key can be extremely difficult for a visually impaired user.

It is an object of the present invention to address the aforementioned problem.

According to a first aspect of the present invention there is provided a self-service terminal user interface including a touch screed that is adapted for receipt of a plurality of symbols and a means adapted to identify specific functions that correspond to each of the symbols.

Preferably, one of the symbols corresponds to a user personal identification number (PIN).

Preferably, one of the symbols corresponds to the "ENTER" key on the terminal.

According to a second aspect of the present invention there is provided a self-service terminal having a user interface as described above.

Preferably, the terminal is an Automated Teller Machine.

According to a third aspect of the present invention there is provided a method of using an interface device as described above, the method including the steps of;
a) inserting a card into an card slot; and
b) entering information, by touching the touch screen so as to draw a predetermined symbol on the screen.

Preferably, the symbols are drawn using the users' finger.

Preferably, the symbols are drawn using a stylus.

An embodiment of the present invention will now be described, by way of example, with reference to the accompanying drawings in which:
Figure 1 is a schematic representation of an Automated Teller Machine, in accordance with the present invention;
Figure 2 is a schematic representation of the user interface of the Automated Teller Machine of Figure 1; and
Figure 3 is a table of some examples of gestures or symbols that can be used in the interface of Figure 2.

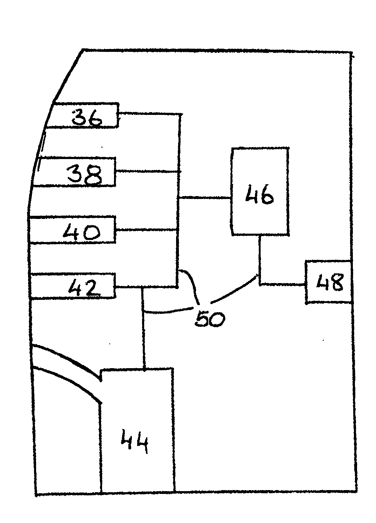

Fig.1 shows a self-service terminal 12 in the form of an ATM 12 in more detail. The ATM 12 includes a display module 36 and encrypting keypad module 38, a magnetic card reader/writer (MCRW) module 40, a receipt printer 42, a cash dispenser module 44, an ATM central processor (CPU) module 46 for controlling the operations of various modules and a network connection module 48 for communication with server 14. The network connection module may also be configured for connection with the Intranet 32, through server 14. The module 48 is arranged to enable the presentation of facsimile and e-mail messages to a user of any of the ATMs 12, as will be described in detail below. Presentation of the aforementioned messages may use the display module 36 or may use the receipt printer 42, which should preferably be an 80 column printer.

A proprietary internal bus 52 interconnects all of the modules within the ATM 24. The magnetic card reader/writer module 40 forms part of a means for verifying a user's authorisation and display module 36 includes a display 58 for the presentation of information to users.

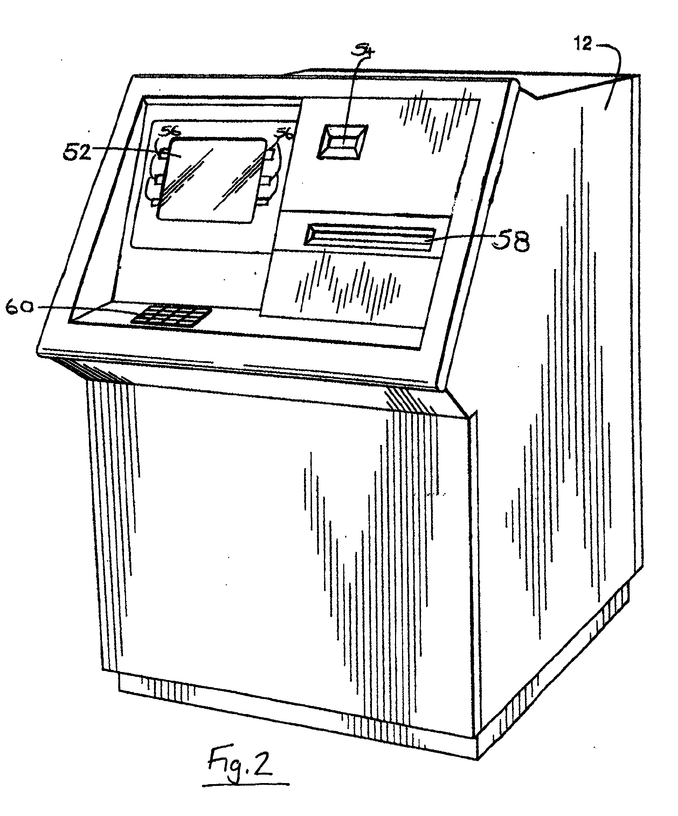

Fig. 2 illustrates the user interface of an ATM 12 in accordance with the present invention. The ATM 12 is a standard ATM with a display 52, including Function Display Keys, (FDK's) 56, a card receiving slot 54, a cash dispensing slot 60 and an encrypting key pad 62. A receipt slot 62.

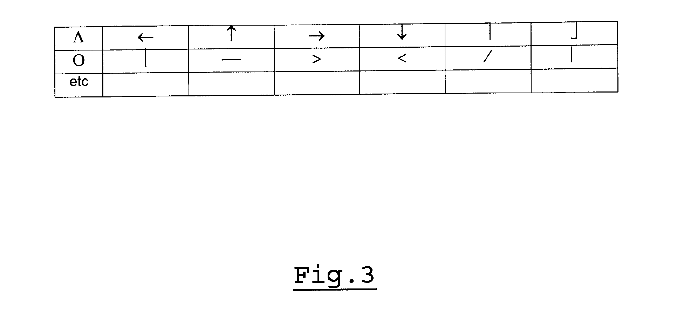

Figure 3 illustrates examples of possible symbols for use with a terminal in accordance wit the present invention.

When a terminal 12 in accordance with the present invention is in use a partially by a sighted user, the user inserts his or her card into the card slot 54 of the terminal 12 and is identified as a user of the touch symbol system. The user may then utilise all of the terminal functions; in this case ATM functions. The only difference with this and normal ATM operation being that the user interacts with the ATM 12 by drawing symbols on the touch screen 52 instead of using the function keys 56 or key pad 60

## Claims

1. A self-service terminal user interface including a touch screed that is adapted for receipt of a plurality of symbols and a means adapted to identify specific functions that correspond to each of the symbols.

2. An interface as claimed in claim 1, wherein one of the symbols corresponds to a user personal identification number (PIN).

3. An interface as claimed in claim 1 or claim 2, wherein one of the symbols corresponds to the "ENTER" key on the terminal.

4. A self-service terminal having a user interface as claimed in any of claims 1 to 3.

5. A self-service terminal as claimed in claim 4, in the form of an Automated Teller Machine.

6. A method of using an interface device as claimed in any of claims 1 to 3, the method including the steps of;
c) inserting a card into an card slot; and
d) entering information, by touching the touch screen so as to draw a predetermined symbol on the screen.

7. A method as claimed in claim 6, wherein the symbols are drawn using the users' finger.

8. A method as claimed in claim 6, wherein the symbols are drawn using a stylus.
